# EUROPÄISCHE PATENTANMELDUNG

(11) **EP 3 336 401 A1**
(43) Veröffentlichungstag der Anmeldung: **20.06.2018**
(21) Anmeldenummer: 16204666.8
(22) Anmeldetag: 16.12.2016
(51) Int. Cl.: F16L 37/00, F16L 37/30

(54) **AUTOMATISIERTES VERBINDEN UND TRENNEN ZWEIER FLUIDLEITUNGEN**

(71) Anmelder: Primetals Technologies Germany GmbH, 91052 Erlangen (DE)
(72) Erfinder: Fischer, Andreas, 77767 Appenweier (DE); Bürkle, Eric, 77746 Schutterwald (DE); Lauer, Alexander, 77948 Friesenheim (DE)
(74) Vertreter: Metals@Linz

(57) **Zusammenfassung**

Die Erfindung betrifft eine Kupplungsvorrichtung (9) zum automatisierten Verbinden und Trennen zweier Fluidleitungen (11, 13) in einem Stahlwerk. Die Kupplungsvorrichtung (9) umfasst ein mit einer ersten Fluidleitung (11) verbundenes Fangelement (15) mit einem Fangtrichter (21), ein mit der zweiten Fluidleitung (13) verbundenes Sondenelement (17) mit einem in den Fangtrichter (21) des Fangelements (15) einführbaren Sondenkopf (23), eine Messvorrichtung zum kontinuierlichen Erfassen von Messdaten zur Bestimmung einer Position und einer Lage des Fangelements (15), einen anhand von den Messdaten steuerbaren Manipulator (19) zum Bewegen und Positionieren des Sondenelements (17) und eine Überwachungsvorrichtung zum Überwachen eines Kupplungszustands des Sondenelements (17) und des Fangelements (15).

## Beschreibung

Die Erfindung betrifft eine Kupplungsvorrichtung zum automatisierten Verbinden und Trennen zweier Fluidleitungen in einem Stahlwerk.

Unter einer Fluidleitung wird hier eine Leitung zum Transport eines Fluids, d. h. eines Gases oder einer Flüssigkeit, verstanden. Eine Fluidleitung kann beispielsweise ein Schlauch oder ein Rohr sein. Zu Fluidleitungen werden hier auch beispielsweise thermische Lanzen gezählt, mit denen Gase in Metallschmelzen eingeblasen werden. In Stahlwerken herrschen oft sehr rauhe Bedingungen, die ein manuelles Verbinden von Fluidleitungen erschweren und für Personen, die ein manuelles Verbinden ausführen, äußerst gefährlich sein können.

Der Erfindung liegt die Aufgabe zugrunde, eine Kupplungsvorrichtung zum automatisierten Verbinden und Trennen zweier Fluidleitungen in einem Stahlwerk anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Eine erfindungsgemäße Kupplungsvorrichtung zum automatisierten Verbinden und Trennen zweier Fluidleitungen in einem Stahlwerk umfasst ein Fangelement, ein Sondenelement, eine Messvorrichtung, einen Manipulator und eine Überwachungsvorrichtung. Das Fangelement ist mit einer ersten Fluidleitung verbunden und weist einen Fangtrichter auf. Das Sondenelement ist mit der zweiten Fluidleitung verbunden und weist einen in den Fangtrichter des Fangelements einführbaren Sondenkopf auf. Die Messvorrichtung ist zum kontinuierlichen Erfassen von Messdaten zur Bestimmung einer Position und einer Lage des Fangelements ausgebildet. Der Manipulator ist anhand von den Messdaten steuerbar und zum Bewegen und Positionieren des Sondenelements ausgebildet. Die Überwachungsvorrichtung ist zum Überwachen eines Kupplungszustands des Sondenelements und des Fangelements ausgebildet.

Die erfindungsgemäße Kupplungsvorrichtung ermöglicht, zwei Fluidleitungen in einem Stahlwerk automatisiert durch ein Sonde-Fangtrichter-Konzept zu verbinden. Dabei ist eine erste Fluidleitung mit einem Fangelement verbunden und die zweite Fluidleitung ist mit einem Sondenelement verbunden. Das Sondenelement wird durch einen Manipulator der Kupplungsvorrichtung automatisiert bewegt und mit dem Fangelement verbunden und von diesem getrennt. Das Fangelement weist einen trichterförmigen Fangtrichter auf, in den ein Sondenkopf des Sondenelements einführbar ist. Diese trichterartige Ausbildung des Fangelements erleichtert vorteilhaft die Kopplung des Sondenelements mit dem Fangelement. Eine Messvorrichtung der Kupplungsvorrichtung ermöglicht die automatische Steuerung des Manipulators durch die Erfassung von Messdaten zur Bestimmung einer Position und einer Lage des Fangelements und insbesondere des Fangtrichters. Eine Überwachungsvorrichtung der Kupplungsvorrichtung ermöglicht vorteilhaft das Überwachen eines Kupplungszustands des Sondenelements und des Fangelements, so dass im Falle einer nicht erfolgreichen Kopplung des Sondenelements an das Fangelement der Kupplungsprozess wiederholt oder abgebrochen werden kann.

Durch die erfindungsgemäße Automatisierung der Verbindung zweier Fluidleitungen in einem Stahlwerk kann vorteilhaft ein manuelles Verbinden der Fluidleitungen und insbesondere eine Gefährdung von Personen bei einem manuellen Verbinden vermieden werden. Dadurch können vorteilhaft Fehler und Personengefährdungen durch ein manuelles Verbinden der Fluidleitungen reduziert werden. Ferner können Personal und somit auch Personalkosten vorteilhaft eingespart werden. Außerdem können vorteilhaft die Geschwindigkeit des Verbindens und Trennens des Sondenelements und des Fangelements durch die Automatisierung erhöht und dadurch die Prozessdauer reduziert werden.

Eine Ausgestaltung der Erfindung sieht vor, dass die Messvorrichtung einen optischen Detektor zur kontinuierlichen Erfassung der Position und der Lage des Fangelements aufweist. Dies ermöglicht vorteilhaft eine berührungslose Erfassung der Position und der Lage des Fangelements.

Eine weitere Ausgestaltung der Erfindung sieht vor, dass die Überwachungsvorrichtung eine optische Sensorvorrichtung oder/und eine elektrische Sensorvorrichtung zur Überwachung des Kupplungszustands des Sondenelements und des Fangelements aufweist. Dies ermöglicht vorteilhaft eine automatische Überwachung des Kupplungszustands des Sondenelements und des Fangelements.

Eine weitere Ausgestaltung der Erfindung sieht vor, dass das Sondenelement einen an dem Manipulator lagerbaren Lagerungsabschnitt aufweist, der über ein Kardangelenk und/oder über wenigstens ein Federelement mit dem Sondenkopf verbunden ist. Dabei ist die zweite Fluidleitung beispielsweise durch den Lagerungsabschnitt zu dem Sondenkopf geführt. Diese Ausgestaltung der Erfindung ermöglicht, dass der Manipulator das Sondenelement an einem Lagerungsabschnitt führt, der mit dem Sondenkopf über ein Kardangelenk und/oder über wenigstens ein Federelement flexibel verbunden ist. Die flexible Verbindung des Lagerungsabschnitts und des Sondenkopfs erleichtert die Kopplung des Sondenelements mit dem Fangelement, indem sie Ungenauigkeiten der Positionierung des Sondenelements sowie relative Bewegungen des Fangelements und des Sondenelements kompensiert.

Eine weitere Ausgestaltung der Erfindung sieht vor, dass das Fangelement ein Befestigungselement aufweist, das über ein Kardangelenk und/oder über wenigstens ein Federelement mit dem Fangtrichter verbunden ist. Über das Befestigungselement kann das Fangelement an einem Objekt befestigt werden. Die flexible Verbindung des Befestigungselements und des Fangtrichters über ein Kardangelenk und/oder über wenigstens ein Federelement erleichtert wiederum die Kopplung des Sondenelements mit dem Fangelement, indem sie Ungenauigkeiten der Positionierung des Sondenelements sowie relative Bewegungen des Fangelements und des Sondenelements kompensiert.

Eine weitere Ausgestaltung der Erfindung sieht vor, dass das Fangelement und das Sondenelement jeweils einen Kupplungsteil einer Schnellkupplung aufweisen, durch die das Fangelement und das Sondenelement lösbar miteinander verbindbar sind. Dies ermöglicht vorteilhaft eine stabile lösbare Verbindung des Sondenelements und des Fangelements.

Eine weitere Ausgestaltung der Erfindung sieht vor, dass die erste Fluidleitung eine Hydraulikleitung eines Hydrauliksystems zum Öffnen und Schließen eines Schrottkorbs ist und die zweite Fluidleitung eine Hydraulikversorgungsleitung ist.

Eine zur vorigen Ausgestaltung alternative Ausgestaltung der Erfindung sieht vor, dass die erste Fluidleitung eine thermische Lanze zum Einblasen eines Gases in eine Metallschmelze ist und die zweite Fluidleitung eine Gasleitung ist.

Eine zu den beiden vorigen Ausgestaltungen alternative Ausgestaltung der Erfindung sieht vor, dass die erste Fluidleitung ein Gasanschluss einer auf einer Pfannenfähre angeordneten Stahlpfanne ist und die zweite Fluidleitung eine Gasleitung ist.

Eine zu den vorigen drei Ausgestaltungen alternative Ausgestaltung der Erfindung sieht vor, dass die erste Fluidleitung eine Hydraulikleitung eines Hydrauliksystems zum Bewegen eines Pfannenschiebers zum Öffnen und Schließen einer Ausgussöffnung einer Stahlpfanne ist und die zweite Fluidleitung eine Hydraulikversorgungsleitung ist.

Die vier vorgenannten Ausgestaltungen der Erfindung sind vorteilhaft, da in allen vier Fällen eine manuelle Verbindung der beiden Fluidleitungen schwierig und für Personen, die die manuelle Verbindung herstellen, gefährlich ist.

Eine erfindungsgemäße Chargiervorrichtung zum Beschicken eines Schachtofens mit Schrott weist einen bewegbaren Schrottkorb mit einem Hydrauliksystem zum Öffnen und Schließen des Schrottkorbs, eine Hydraulikversorgungsleitung und eine erfindungsgemäße Kupplungsvorrichtung zum automatisierten Verbinden und Trennen der Hydraulikversorgungsleitung und einer Hydraulikleitung des Hydrauliksystems auf. Dabei ist die Hydraulikversorgungsleitung beispielsweise über eine Leitungstrommel oder girlandenartig an einer Leitungsaufhängung geführt. Die Beschickung eines Schachtofens mit Schrott findet in einer relativ großen Höhe statt, wobei der Schrottkorb in der Regel durch einen Kran bewegt wird, so dass sich der Schrottkorb schaukelnd bewegen kann. Dies erschwert eine manuelle Kopplung einer Hydraulikversorgungsleitung mit dem Hydrauliksystem des Schrottkorbs erheblich und macht die manuelle Verbindung besonders gefährlich. Daher eignet sich eine erfindungsgemäße Kupplungsvorrichtung besonders vorteilhaft zum automatisierten Koppeln der Hydraulikversorgungsleitung an das Hydrauliksystem des Schrottkorbs.

Bei einem erfindungsgemäßen Verfahren zum Betrieb einer erfindungsgemäßen Kupplungsvorrichtung werden mit der Messvorrichtung Messdaten zur Bestimmung einer Position und einer Lage des Fangelements erfasst, der Manipulator wird anhand der Messdaten gesteuert, das Sondenelement wird durch den Manipulator bewegt und positioniert, um das Sondenelement und das Fangelement miteinander zu verbinden und voneinander zu trennen, und der Kupplungszustand des Sondenelements und des Fangelements wird mit der Überwachungsvorrichtung überwacht. Das Verfahren ermöglicht das automatisierte Verbinden und Trennen zweier Fluidleitungen in einem Stahlwerk mit den oben genannten Vorteilen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine perspektivische Darstellung einer Chargiervorrichtung in einem ersten Stadium eines Kupplungsprozesses eines Sondenelements und eines Fangelements,
FIG 2 die in Figur 1 dargestellte Chargiervorrichtung in einem zweiten Stadium des Kupplungsprozesses,
FIG 3 die in Figur 1 dargestellte Chargiervorrichtung in einem dritten Stadium des Kupplungsprozesses,
FIG 4 die in Figur 1 dargestellte Chargiervorrichtung in einem vierten Stadium des Kupplungsprozesses,
FIG 5 eine Seitenansicht eines Fangelements und eines Sondenelements einer Kupplungsvorrichtung,
FIG 6 eine Schnittdarstellung des in Figur 5 gezeigten Fangelements und des in Figur 5 gezeigten Sondenelements,
FIG 7 eine perspektivische Darstellung einer Schnellkupplung,
FIG 8 eine Schnittdarstellung eines Sondenelements im Bereich eines Kardangelenks,
FIG 9 eine Leitungstrommel, und
FIG 10 eine Leitungsaufhängung und eine Hydraulikversorgungsleitung.

Einander entsprechende Teile sind in den Figuren mit denselben Bezugszeichen versehen.

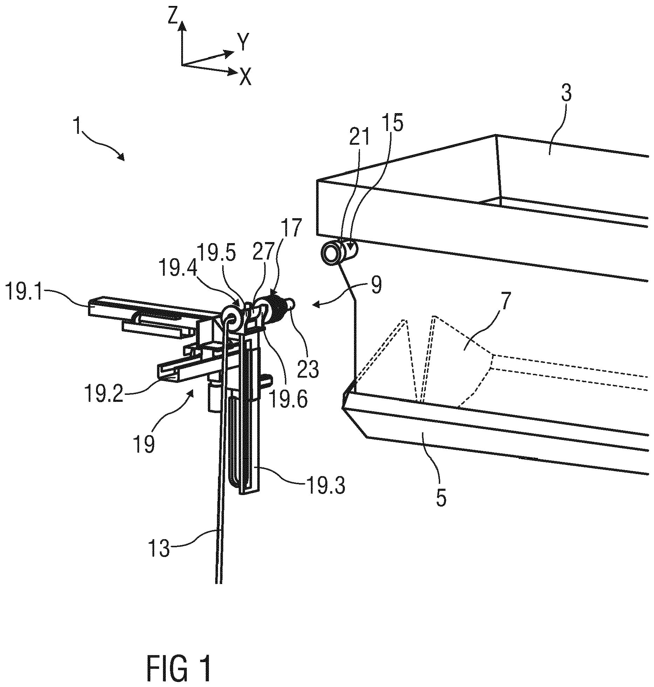

Die Figuren 1 bis 4 zeigen perspektivische Darstellungen einer Chargiervorrichtung 1 zum Beschicken eines (nicht dargestellten) Schachtofens mit Schrott. Die Chargiervorrichtung 1 weist einen Schrottkorb 3 auf, der beispielsweise durch einen (nicht dargestellten) Kran bewegbar ist. Der Schrottkorb 3 weist einen Boden auf, der durch ein nicht näher dargestelltes Hydrauliksystem des Schrottkorbs 3 geöffnet und geschlossen werden kann. Dazu wird der Boden beispielsweise von zwei Klappen 5, 7 gebildet, die im geschlossenen Zustand des Schrottkorbs 3 aneinander anliegen. Zum Öffnen des Schrottkorbs 3 werden die Klappen 5, 7 durch das Hydrauliksystem auseinander bewegt. Beispielsweise sind die Klappen 5, 7 um zueinander parallele Schwenkachsen in einander entgegengesetzten Schwenkrichtungen schwenkbar, um den Schrottkorb 3 zu öffnen und zu schließen.

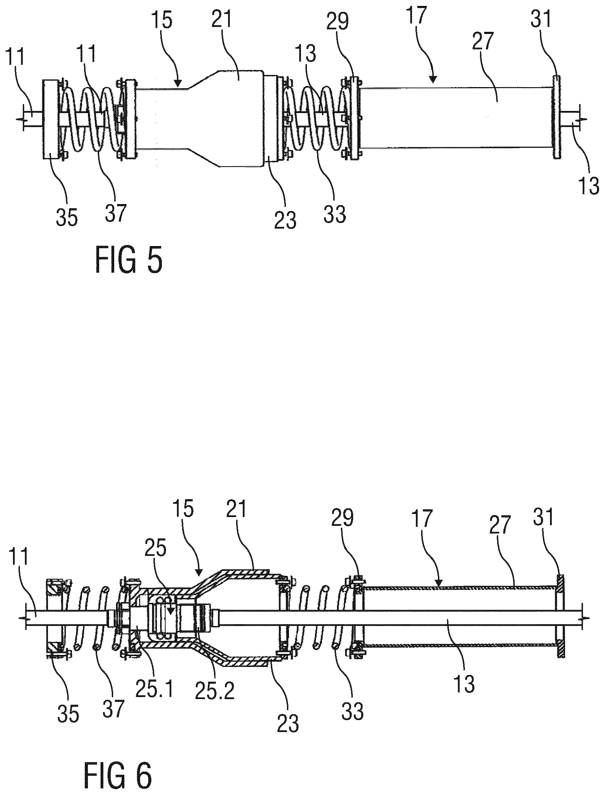

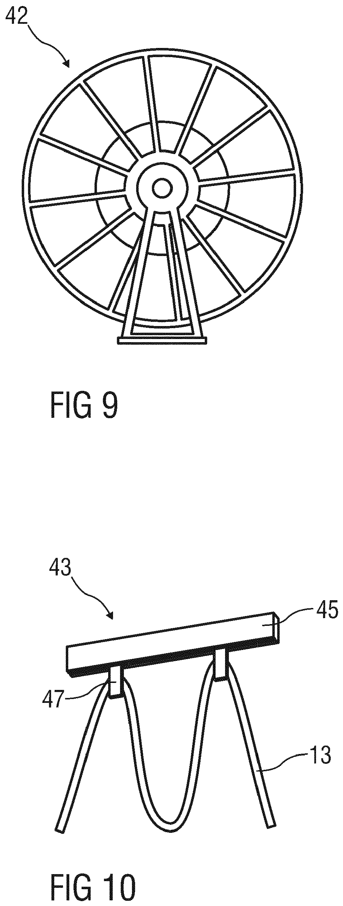

Die Chargiervorrichtung 1 weist ferner eine Kupplungsvorrichtung 9 zum automatisierten Verbinden und Trennen zweier Fluidleitungen 11, 13 auf. Dabei ist eine erste Fluidleitung 11 (siehe Figur 5 und Figur 6) eine an dem Schrottkorb 3 angeordnete Hydraulikleitung des Hydrauliksystems des Schrottkorbs 3 und die zweite Fluidleitung 13 ist eine Hydraulikversorgungsleitung, beispielsweise ein Hydraulikschlauch. Die Hydraulikversorgungsleitung wird beispielsweise über eine Leitungstrommel 42 (siehe Figur 9) oder girlandenartig an einer Leitungsaufhängung 43 (siehe Figur 10) geführt.

Die Kupplungsvorrichtung 9 weist ein mit der ersten Fluidleitung 11 verbundenes Fangelement 15, ein mit der zweiten Fluidleitung 13 verbundenes Sondenelement 17, eine (nicht dargestellte) Messvorrichtung, einen Manipulator 19 und eine (nicht dargestellte) Überwachungsvorrichtung auf.

Das Fangelement 15 und das Sondenelement 17 werden miteinander gekoppelt, um die Fluidleitungen 11, 13 miteinander zu verbinden, und voneinander getrennt, um die Verbindung der Fluidleitungen 11, 13 zu lösen. Dazu wird das Sondenelement 17 durch den Manipulator 19 bewegt und positioniert. Das Fangelement 15 weist einen Fangtrichter 21 auf, in den ein Sondenkopf 23 des Sondenelements 17 eingeführt wird. Ferner weisen das Fangelement 15 und das Sondenelement 17 jeweils einen Kupplungsteil 25.1, 25.2 einer Schnellkupplung 25 auf, durch die sie lösbar miteinander verbindbar sind (siehe die Figuren 5 bis 7). Das Fangelement 15 und das Sondenelement 17 werden unten anhand der Figuren 5 bis 7 näher beschrieben.

Mit der Messvorrichtung werden Messdaten zur Bestimmung einer Position und einer Lage des Fangelements 15 erfasst. Beispielsweise weist die Messvorrichtung einen optischen Detektor, beispielsweise einen Laserdetektor, zur Erfassung der Position und der Lage des Fangelements 15 auf.

Der Manipulator 19 ist an einem (nicht dargestellten) Träger angeordnet und wird anhand der Messdaten gesteuert. Der Manipulator 19 weist drei Verschiebungselemente 19.1 bis 19.3 auf, die in zueinander senkrechten Richtungen linear verschiebbar sind. Ein erstes Verschiebungselement 19.1 ist in einer Richtung verschiebbar, die eine X-Richtung eines kartesischen Koordinatensystems mit Koordinaten X, Y, Z definiert. An dem ersten Verschiebungselement 19.1 ist ein zweites Verschiebungselement 19.2 angeordnet, das in einer Richtung verschiebbar ist, die die Y-Richtung des Koordinatensystems definiert. Das dritte Verschiebungselement 19.3 ist an dem zweiten Verschiebungselement 19.2 angeordnet und in der Z-Richtung des Koordinatensystems verschiebbar.

An dem ditten Verschiebungselement 19.3 ist eine Haltevorrichtung 19.4 für das Sondenelement 17 angeordnet. Die Haltevorrichtung 19.4 weist zwei jeweils zweizinkige Haltegabeln 19.5, 19.6 auf, auf denen ein rohrartiger Lagerungsabschnitt 27 des Sondenelements 17 gelagert werden kann. Durch die Verschiebungselemente 19.1 bis 19.3 ist die Haltevorrichtung 19.4 dreidimensional bewegbar, so dass auch das Sondenelement 17 durch den Manipulator 19 dreidimensional bewegbar ist, wenn es von der Haltevorrichtung 19.4 gehalten wird.

Mit der Überwachungsvorrichtung wird ein Kupplungszustand des Sondenelements 17 und des Fangelements 15 überwacht. Beispielsweise weist die Überwachungsvorrichtung eine optische Sensorvorrichtung zur Überwachung des Kupplungszustands auf. Die optische Sensorvorrichtung ist beispielsweise ein Kamerasystem mit einer Kamera und einer Bildauswertungseinheit oder ein Vision-Sensor. Alternativ oder zusätzlich weist die Überwachungsvorrichtung eine elektrische Sensorvorrichtung zur Überwachung des Kupplungszustands auf. Die elektrische Sensorvorrichtung weist beispielsweise einen Näherungsschalter und/oder einen Kontaktschalter auf.

Die Figuren 1 bis 4 zeigen verschiedene Stadien eines Kupplungsprozesses, bei dem das Sondenelement 17 und das Fangelements 15 automatisiert miteinander gekoppelt werden.

Figur 1 zeigt die Ausgangssituation des Kupplungsprozesses, in der der Manipulator 19 das Sondenelement 17 in einer Ausgangsstellung hält.

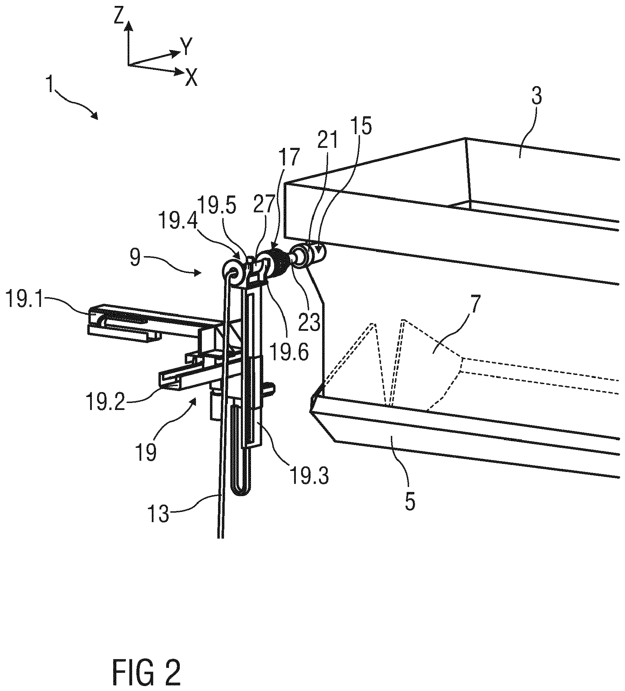

Figur 2 zeigt das Sondenelement 17 in einer Zwischenstellung, in der es von dem Manipulator 19 kurz vor den Fangtrichter 21 geführt wurde. Um das Sondenelement 17 aus der Ausgangsstellung in die Zwischenstellung zu bewegen, werden durch die Messvorrichtung Messdaten erfasst. Der Manipulator 19 ermittelt aus den Messdaten die Position und Lage des Fangelements 15 und bewegt das Sondenelement 17 durch die Verschiebungselemente 19.1 bis 19.3 in die Zwischenstellung.

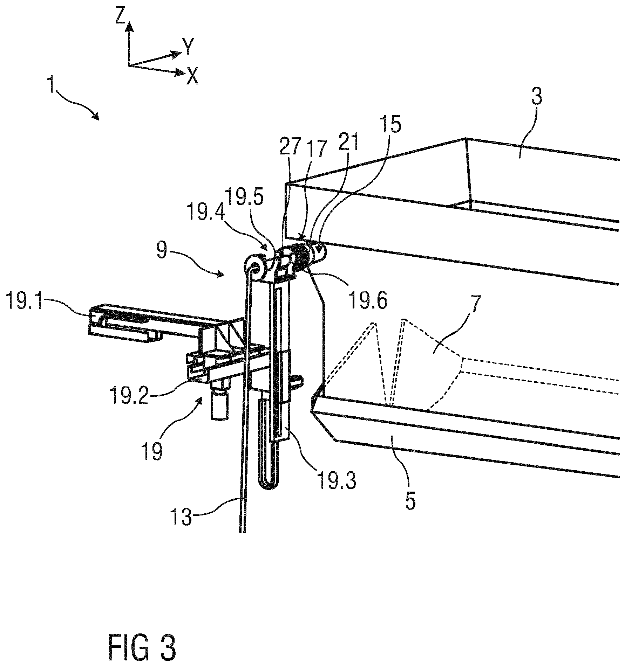

Figur 3 zeigt das Sondenelement 17 in einer Endstellung, in der es an das Fangelement 15 gekoppelt ist, wobei es noch durch den Manipulator 19 gehalten wird. Das Sondenelement 17 wird durch den Manipulator 19 aus der Zwischenstellung in die Endstellung bewegt, indem der Sondenkopf 23 in den Fangtrichter 21 eingeführt wird bis das Sondenelement 17 und das Fangelement 15 durch die Schnellkupplung 25 miteinander verbunden sind. Dabei wird der Kupplungszustand des Sondenelements 17 und des Fangelements 15 durch die Überwachungsvorrichtung überwacht. Sollte eine erfolgreiche Verbindung des Sondenelements 17 und des Fangelements 15 durch die Schnellkupplung 25 nicht erreicht werden, wird der Kupplungsprozess abgebrochen. Es kann ferner vorgesehen sein, dass der Manipulator 19 auch von einem Kontrollraum aus steuerbar ist, so dass der Kupplungsprozess gegebenenfalls von dem Kontrollraum aus gesteuert werden kann.

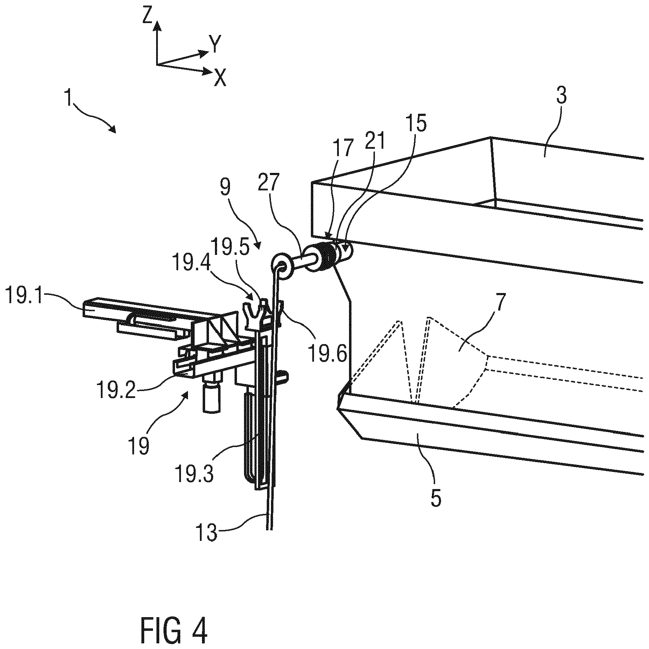

Nachdem von der Überwachungsvorrichtung die erfolgreiche Verbindung des Sondenelements 17 und des Fangelements 15 durch die Schnellkupplung 25 signalisiert wurde, wird das Sondenelement 17 von dem Manipulator 19 freigegeben und die Haltevorrichtung 19.4 des Manipulators 19 wird durch die Verschiebungselemente 19.1 bis 19.3 von dem Schrottkorb 3 weg in eine Wartestellung bewegt, die in Figur 4 gezeigt ist und beispielsweise mit der in Figur 1 gezeigten Stellung der Haltevorrichtung 19.4 übereinstimmt.

Zum Trennen des Sondenelements 17 und des Fangtrichters 21 werden die oben anhand der Figuren 1 bis 4 beschriebenen Verfahrensschritte im Wesentlichen in umgekehrter Reihenfolge durchgeführt. Zunächst wird die Haltevorrichtung 19.4 des Manipulators 19 durch die Verschiebungselemente 19.1 bis 19.3 anhand der Messdaten der Messvorrichtung von der in Figur 4 gezeigten Wartestellung in die in Figur 3 gezeigte Stellung gefahren. Dann wird das Sondenelement 17 durch den Manipulator 19 von dem Fangelement 15 getrennt und in die in Figur 1 gezeigte Ausgangsstellung bewegt.

Die Figuren 5 und 6 zeigen das Fangelement 15 und das Sondenelement 17 der Kupplungsvorrichtung 1, wobei das Fangelement 15 und das Sondenelement 17 miteinander verbunden sind. Dabei zeigt Figur 5 eine Seitenansicht und Figur 6 zeigt eine Schnittdarstellung.

Der Lagerungsabschnitt 27 des Sondenelements 17 ist als ein Hohlzylinder ausgeführt, an dessen Enden jeweils ein ringförmig ausgebildetes Anschlagelement 29, 31 angeordnet ist, das einen größeren Außendurchmesser als der Querschnitt des Hohlzylinders aufweist, so dass eine Haltegabel 19.5, 19.6 der Haltevorrichtung 19.4 des Manipulators 19 an dem Anschlagelement 29, 31 anschlagen kann, wenn der Hohlzylinder des Lagerungsabschnitts 27 auf den Haltegabeln 19.5, 19.6 gelagert ist.

Der Lagerungsabschnitt 27 ist über ein erstes Federelement 33 mit dem Sondenkopf 23 des Sondenelements 17 verbunden. Das erste Federelement 33 dient als Überlastungsschutz der Verbindung. Der Sondenkopf 23 ist als ein trichterartiger Hohlkörper ausgeführt, der sich zu dem Lagerungsabschnitt 27 hin weitet.

In dem Sondenkopf 23 ist der mütterliche Kupplungsteil 25.2 der Schnellkupplung 25 angeordnet.

Die zweite Fluidleitung 13 ist durch den Lagerungsabschnitt 27 zu dem Sondenkopf 23 geführt und in dem Sondenkopf 23 mit dem mütterlichen Kupplungsteil 25.2 verbunden. Das erste Federelement 33 verläuft spiralförmig um den zwischen dem Sondenkopf 23 und dem Lagerungsabschnitt 27 verlaufenden Abschnitt der zweiten Fluidleitung 13.

Der Fangtrichter 21 des Fangelements 15 korrespondiert zu dem Sondenkopf 23 des Sondenelements 17, so dass der Sondenkopf 23 in den Fangtrichter 21 einführbar ist. In dem Fangtrichter 21 ist der väterliche Kupplungsteil 25.1 der Schnellkupplung 25 angeordnet.

Das Fangelement 15 weist ein ringförmiges Befestigungselement 35 auf, das über ein zweites Federelement 37 mit dem Fangtrichter 21 verbunden ist und an dem Schrottkorb 3 befestigt ist. Die erste Fluidleitung 11 ist durch das Befestigungselement 35 zu dem Fangtrichter 21 geführt und mit dem väterlichen Kupplungsteil 25.1 verbunden. Das zweite Federelement 37 verläuft spiralförmig um den zwischen dem Fangtrichter 21 und dem Befestigungselement 35 verlaufenden Abschnitt der ersten Fluidleitung 11.

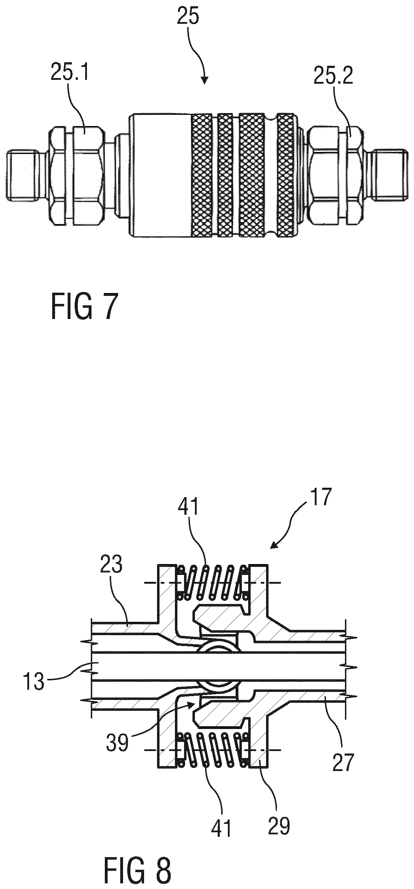

Figur 7 zeigt die Schnellkupplung 25 im Zustand, in dem die Kupplungsteile 25.1, 25.2 miteinander verbunden sind. Die Schnellkupplung 25 ist als eine im Prinzip bekannte so genannte Push-Pull-Kupplung ausgebildet. Zum Verbinden der Kupplungsteile 25.1, 25.2 wird ein Ende des mütterlichen Kupplungsteils 25.2 über ein Ende des väterlichen Kupplungsteils 25.1 geschoben bis ein Kragen im Inneren des mütterlichen Kupplungsteils 25.2 in einer Nut in dem väterlichen Kupplungsteil 25.1 einrastet. Zum Trennen der Kupplungsteils 25.1, 25.2 wird der mütterliche Kupplungsteil 25.2 von dem väterlichen Kupplungsteil 25.1 abgezogen. Beide Kupplungsteile 25.1, 25.2 sind als Hohlkörper zur Durchleitung eines in den Fluidleitungen 11, 13 geführten Fluids ausgebildet, wobei die Kupplungsteile 25.1, 25.2 beim Trennen der Kupplungsteile 25.1, 25.2 automatisch verschlossen werden.

Figur 8 zeigt eine Schnittdarstellung eines zu dem in den Figuren 5 und 6 dargestellten Sondenelement 17 alternativen Ausführungsbeispiels eines Sondenelements 17 im Bereich einer Verbindung des Sondenkopfes 23 und des Lagerungsabschnitts 27. Bei diesem Ausführungsbeispiel sind der Sondenkopf 23 und der Lagerungsabschnitt 27 über ein Kardangelenk 39 miteinander verbunden. Zur axialen Ausrichtung des Kardangelenks 39 sind der Sondenkopf 23 und der Lagerungsabschnitt 27 ferner über mehrere dritte Federelemente 41 miteinander verbunden, die um das Kardangelenk 39 verteilt angeordnet sind. Das Gelenkkreuz des Kardangelenks 39 weist eine zentrale Öffnung auf, durch die zweite Fluidleitung 13 geführt ist. Vorzugsweise sind der Sondenkopf 23 und der Lagerungsabschnitt 27 analog zu den Figuren 5 und 6 zusätzlich über ein (in Figur 8 nicht dargestelltes) erstes Federelement 33 miteinander verbunden, das als Überlastungsschutz der Verbindung dient. Abgesehen von der Verbindung des Sondenkopfes 23 mit dem Lagerungsabschnitt 27 ist das Sondenelement 17 analog zu dem in den Figuren 5 und 6 dargestellten Sondenelement 17 ausgebildet.

Alternativ zu den Figuren 5 und 6 kann auch das Fangelement 15 analog zu Figur 8 ein Kardangelenk 39 und dritte Federelemente 41 aufweisen, die das Befestigungselement 35 mit dem Fangtrichter 21 verbinden.

Die Figuren 9 und 10 zeigen zueinander alternative Führungen einer als eine Hydraulikversorgungsleitung ausgebildeten zweiten Fluidleitung 13.

Figur 9 zeigt eine Leitungstrommel 42 zur Führung der Hydraulikversorgungsleitung.

Figur 10 zeigt einen Abschnitt einer Leitungsaufhängung 43, an der die Hydraulikversorgungsleitung aufgehängt ist. Die Leitungsaufhängung 43 weist ein balkenartiges Führungselement 45 auf, an dem Halteelemente 47 angeordnet sind, die entlang einer Längsachse des Führungselements 45 verschiebbar sind und an denen die Hydraulikversorgungsleitung girlandenartig aufgehängt ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Chargiervorrichtung
- 3: Schrottkorb
- 5, 7: Klappe
- 9: Kupplungsvorrichtung
- 11, 13: Fluidleitung
- 15: Fangelement
- 17: Sondenelement
- 19: Manipulator
- 19.1 bis 19.3: Verschiebungselement
- 19.4: Haltevorrichtung
- 19.5, 19.6: Haltegabel
- 21: Fangtrichter
- 23: Sondenkopf
- 25: Schnellkupplung
- 25.1, 25.2: Kupplungsteil
- 27: Lagerungsabschnitt
- 29, 31: Anschlagelement
- 33, 37, 41: Federelement
- 35: Befestigungselement
- 39: Kardangelenk
- 42: Leitungstrommel
- 43: Leitungsaufhängung
- 45: Führungselement
- 47: Halteelement
- X, Y, Z: Koordinate

## Patentansprüche

1. Kupplungsvorrichtung (9) zum automatisierten Verbinden und Trennen zweier Fluidleitungen (11, 13) in einem Stahlwerk,
die Kupplungsvorrichtung (9) umfassend
- ein mit einer ersten Fluidleitung (11) verbundenes Fangelement (15) mit einem Fangtrichter (21),
- ein mit der zweiten Fluidleitung (13) verbundenes Sondenelement (17) mit einem in den Fangtrichter (21) des Fangelements (15) einführbaren Sondenkopf (23),
- eine Messvorrichtung zum kontinuierlichen Erfassen von Messdaten zur Bestimmung einer Position und einer Lage des Fangelements (15),
- einen anhand von den Messdaten steuerbaren Manipulator (19) zum Bewegen und Positionieren des Sondenelements (17)
- und eine Überwachungsvorrichtung zum Überwachen eines Kupplungszustands des Sondenelements (17) und des Fangelements (15).

2. Kupplungsvorrichtung (9) nach Anspruch 1,
**dadurch gekennzeichnet, dass** die Messvorrichtung einen optischen Detektor zur kontinuierlichen Erfassung der Position und der Lage des Fangelements (15) aufweist.

3. Kupplungsvorrichtung (9) nach Anspruch 1 oder 2,
**dadurch gekennzeichnet, dass** die Überwachungsvorrichtung eine optische Sensorvorrichtung oder/und eine elektrische Sensorvorrichtung zur Überwachung des Kupplungszustands des Sondenelements (17) und des Fangelements (15) aufweist.

4. Kupplungsvorrichtung (9) nach einem der vorhergehenden Ansprüche,
**dadurch gekennzeichnet, dass** das Sondenelement (17) einen an dem Manipulator (19) lagerbaren Lagerungsabschnitt (27) aufweist, der über ein Kardangelenk (39) und/oder über wenigstens ein Federelement (33, 37, 41) mit dem Sondenkopf (23) verbunden ist.

5. Kupplungsvorrichtung (9) nach Anspruch 4,
**dadurch gekennzeichnet, dass** die zweite Fluidleitung (13) durch den Lagerungsabschnitt (27) zu dem Sondenkopf (23) geführt ist.

6. Kupplungsvorrichtung (9) nach einem der vorhergehenden Ansprüche,
**dadurch gekennzeichnet, dass** das Fangelement (15) ein Befestigungselement (35) aufweist, das über ein Kardangelenk (39) und/oder über wenigstens ein Federelement (33, 37, 41) mit dem Fangtrichter (21) verbunden ist.

7. Kupplungsvorrichtung (9) nach einem der vorhergehenden Ansprüche,
**dadurch gekennzeichnet, dass** das Fangelement (15) und das Sondenelement (17) jeweils einen Kupplungsteil (25.1, 25.2) einer Schnellkupplung (25) aufweisen, durch die das Fangelement (15) und das Sondenelement (17) lösbar miteinander verbindbar sind.

8. Kupplungsvorrichtung (9) nach einem der vorhergehenden Ansprüche,
**dadurch gekennzeichnet, dass** die erste Fluidleitung (11) eine Hydraulikleitung eines Hydrauliksystems zum Öffnen und Schließen eines Schrottkorbs (3) ist und die zweite Fluidleitung (13) eine Hydraulikversorgungsleitung ist.

9. Kupplungsvorrichtung (9) nach einem der Ansprüche 1 bis 7,
**dadurch gekennzeichnet, dass** die erste Fluidleitung (11) eine thermische Lanze zum Einblasen eines Gases in eine Metallschmelze ist und die zweite Fluidleitung (13) eine Gasversorgungsleitung ist.

10. Kupplungsvorrichtung (9) nach einem der Ansprüche 1 bis 7,
**dadurch gekennzeichnet, dass** die erste Fluidleitung (11) ein Gasanschluss einer auf einer Pfannenfähre angeordneten Stahlpfanne ist und die zweite Fluidleitung (13) eine Gasversorgungsleitung ist.

11. Kupplungsvorrichtung (9) nach einem der Ansprüche 1 bis 7,
**dadurch gekennzeichnet, dass** die erste Fluidleitung (11) eine Hydraulikleitung eines Hydrauliksystems zum Bewegen eines Pfannenschiebers zum Öffnen und Schließen einer Ausgussöffnung einer Stahlpfanne ist und die zweite Fluidleitung (13) eine Hydraulikversorgungsleitung ist.

12. Chargiervorrichtung (1) zum Beschicken eines Schachtofens mit Schrott, die Chargiervorrichtung (1) aufweisend
- einen bewegbaren Schrottkorb (3) mit einem Hydrauliksystem zum Öffnen und Schließen des Schrottkorbs (3),
- eine Hydraulikversorgungsleitung
- und eine Kupplungsvorrichtung (9) nach Anspruch 8 zum automatisierten Verbinden und Trennen der Hydraulikversorgungsleitung und einer Hydraulikleitung des Hydrauliksystems.

13. Chargiervorrichtung (1) nach Anspruch 12,
**dadurch gekennzeichnet, dass** die Hydraulikversorgungsleitung über eine Leitungstrommel (42) geführt ist.

14. Chargiervorrichtung (1) nach Anspruch 12,
**dadurch gekennzeichnet, dass** die Hydraulikversorgungsleitung girlandenartig an einer Leitungsaufhängung (43) geführt ist.

15. Verfahren zum Betrieb einer gemäß einem der Ansprüche 1 bis 11 ausgebildeten Kupplungsvorrichtung (9), wobei
- mit der Messvorrichtung Messdaten zur kontinuierlichen Bestimmung einer Position und einer Lage des Fangelements (15) erfasst werden,
- der Manipulator (19) anhand der Messdaten gesteuert wird,
- das Sondenelement (17) durch den Manipulator (19) bewegt und positioniert wird, um das Sondenelement (17) und das Fangelement (15) miteinander zu verbinden und voneinander zu trennen,
- und der Kupplungszustand des Sondenelements (17) und des Fangelements (15) mit der Überwachungsvorrichtung überwacht wird.
